# EUROPEAN PATENT SPECIFICATION

(11) **EP 2 983 399 B1**
(45) Date of publication and mention of the grant of the patent: **16.01.2019**
(21) Application number: 14801674.4
(22) Date of filing: 16.05.2014
(51) Int. Cl.: H04W 28/02, H04L 29/06, H04L 29/08, H04W 4/00, H04W 8/20, H04W 12/08, H04W 12/06, H04W 40/24

(54) **METHOD, DEVICE, AND SYSTEM FOR PROXIMITY SERVICE AUTHORIZATION**
VERFAHREN, VORRICHTUNG UND SYSTEM ZUR NÄHERUNGSDIENSTAUTORISIERUNG
PROCÉDÉ, DISPOSITIF ET SYSTÈME D'AUTORISATION DE SERVICE DE PROXIMITÉ

(30) Priority: 20.05.2013 CN 201310188604
(43) Date of publication of application: 10.02.2016
(73) Proprietor: Huawei Device (Dongguan) Co., Ltd., Dongguan, Guangdong 523808 (CN)
(72) Inventor: GAO, Chenliang, Shenzhen Guangdong 518129 (CN); JIN, Hui, Shenzhen Guangdong 518129 (CN); OUYANG, Guowei, Shenzhen Guangdong 518129 (CN)
(74) Representative: Kreuz, Georg Maria
(86) International application number: PCT/CN2014/077656
(87) International publication number: WO 2014/187277

(56) References cited:
- EP-A2- 1 519 531
- CN-A- 102 461 128
- US-A1- 2009 288 138
- US-A1- 2010 009 675
- US-A1- 2010 278 345

## Description

### TECHNICAL FIELD

Embodiments of the present invention relate to the field of communications technologies, and in particular, to a proximity service authorization method, an apparatus, and a system.

### BACKGROUND

In a mobile communications network, data communication between user equipments needs to be performed through a core network entity, such as a serving gateway (Serving Gateway, SGW)/a packet data network gateway (Packet Data Network Gateway, PGW). Therefore, higher network transmission bandwidth is required by the core network entity, leading to a heavier network transmission burden of the core network entity. Even if data needs to be transmitted between two user equipments that are close to each other, transmission still needs to be performed by using a core network, resulting in lower transmission efficiency.

Currently, in order to reduce the network transmission burden of the core network entity, a proximity services (Proximity Services, ProSe) processing method is used, so that two user equipments that are close to each other can directly perform data communication without a need to perform data communication by using the core network entity, and the transmission efficiency can be improved.

However, in an existing proximity service implementation process and method, a ProSe server (Prose Server) does not need to authorize and authenticate user equipment using a proximity service; as a result, the ProSe server cannot properly control a proximity service of user equipment of a mobile terminal, and therefore, service quality of the proximity service of the user equipment cannot be ensured.

### SUMMARY

The present invention provides methods as defined in independent claims 1 and 5, devices as defined in independent claims 6 and 10, and a system as defined in independent claim 11, for controlling the access to a proximity service.

Particular embodiments are defined in the dependent claims.

EP1519531 discloses a method and a system for controlling the establishment of p2p communications, by means of a server which authenticates each client and provides information to them, after which they are enabled to establish p2p communications.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a proximity service authorization method according to an embodiment of the present invention;
FIG. 2 is a schematic flowchart of a proximity service authorization method according to another embodiment of the present invention;
FIG. 3 is a signaling diagram of a proximity service authorization method according to another embodiment of the present invention;
FIG. 4 is a signaling diagram of a proximity service authorization method according to another embodiment of the present invention;
FIG. 5 is a schematic structural diagram of a first network-side entity according to another embodiment of the present invention;
FIG. 6 is a schematic structural diagram of user equipment according to another embodiment of the present invention;
FIG. 7 is a schematic structural diagram of a first network-side entity according to another embodiment of the present invention;
FIG. 8 is a schematic structural diagram of user equipment according to another embodiment of the present invention; and
FIG. 9 is a schematic structural diagram of a proximity service authorization system according to another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In an existing proximity service authorization method, a proximity service server does not need to authorize and authenticate user equipment using a proximity service; as a result, the proximity service server cannot properly control a proximity service of user equipment of a mobile terminal, and therefore, service quality of the proximity service of the user equipment cannot be ensured. The proximity service server is an entity for controlling a ProSe service, and may have another name, such as a proximity service control function (PDCF), which is not limited in the present invention.

Further, in the existing proximity service authorization method, proximity service authorization can be performed on two user equipments that need to directly perform data communication only when the two user equipments are located in a same public land mobile network (Public Land Mobile Network, PLMN); when two user equipments that need to directly perform data communication are located in different PLMNs, proximity service authorization cannot be performed on the two user equipments. Therefore, an application limitation exists.

In view of the problem existing in the prior art, the present invention provides a proximity service authorization method, which can resolve the following problem in an existing proximity service implementation method: Because a proximity service server does not need to authorize and authenticate user equipment using a proximity service, the proximity service server cannot properly control a proximity service of user equipment of a mobile terminal, and therefore, service quality of the proximity service of the user equipment cannot be ensured. Moreover, when two user equipments that need to directly perform data communication are located in different PLMNs, proximity service authorization can still be performed on the two user equipments, which extends an application scope of the existing proximity service authorization method.

The technical solutions of the present invention may be applied to various wireless communications systems, such as a Global System for Mobile Communications (Global System for Mobile Communications in English, GSM for short), a general packet radio service (General Packet Radio Service in English, GPRS for short), a Code Division Multiple Access (Code Division Multiple Access in English, CDMA for short) system, a CDMA2000 system, a Wideband Code Division Multiple Access (Wideband Code Division Multiple Access in English, WCDMA for short) system, a Long Term Evolution (Long Term Evolution in English, LTE for short) system, or a Worldwide Interoperability for Microwave Access (Worldwide Interoperability for Microwave Access in English, WiMAX for short) system.

It should be noted that a network-side entity in the embodiments of the present invention includes a proximity service server (ProSe Server), a mobility management entity (Mobility Management Entity, MME), or a home subscriber server (Home Subscriber Server, HSS).

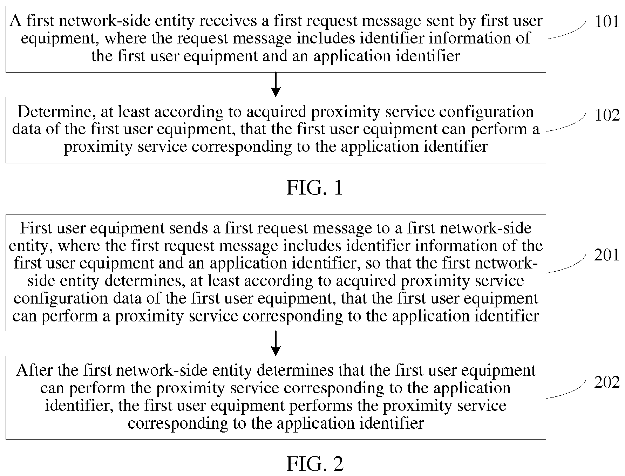

FIG. 1 is a schematic flowchart of a proximity service authorization method according to an embodiment of the present invention. As shown in FIG. 1, the proximity service authorization method in this embodiment may include:
101: A first network-side entity receives a first request message sent by first user equipment, where the request message includes identity information of the first user equipment and an application identifier.

The first request message may be, for example, a discovery request (device discovery request) message, and the request message includes the identity information of the first user equipment and the application identifier. In an actual application, the request message further includes identity information of second user equipment. The first user equipment is discovering user equipment, and the second user equipment is discovered user equipment.

The identity information of the first user equipment includes, for example, a proximity service identifier registered with a corresponding network-side entity by the first user equipment, and an identifier of a public land mobile network (Public Land Mobile Network, PLMN) in which the first user equipment is located, such as an international mobile subscriber identity (IMSI) or a globally unique temporary identity (GUTI). The identity information of the second user equipment includes, for example, a proximity service identifier registered with a corresponding network-side entity by the second user equipment and an identity of a PLMN in which the second user equipment is located, such as an international mobile subscriber identity (IMSI) or a globally unique temporary identity (GUTI).

102: Determine, at least according to acquired proximity service configuration data of the first user equipment, that the first user equipment can perform a proximity service corresponding to the application identifier.

The proximity service configuration data of the first user equipment includes one or more of the following: whether the first user equipment is allowed to discover, be discovered, to perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service. The configuration data described in the present invention is data used for performing authorization on a proximity service, and includes a user preference and/or subscription data, and the like, and the configuration data is only a generalization.

In an optional implementation manner of the present invention, in specific implementation, the acquiring proximity service configuration data of the first user equipment is:
receiving, by the first network-side entity, first information sent by the first user equipment, where the first information includes one or more of the following: whether the first user equipment is allowed to discover, be discovered, perform proximity service communication, and a range of proximity service communication of the first user equipment.

In an optional implementation manner of the present invention, in specific implementation, the acquiring proximity service configuration data of the first user equipment is:
receiving, by the first network-side entity, second information of a first user equipment sent by a second network-side entity, where the second information includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service.

For example, the range of proximity service communication of the first user equipment includes an identifier of an application, of the first user equipment, that can use a proximity service, such as an application identifier (application ID) or another identifier that can be mapped as the application identifier.

In an optional implementation manner of the present invention, if the first user equipment is allowed to perform a proximity service in a visited public land mobile network (VPLMN), and the first network-side entity is a network-side entity of the visited public land mobile network (VPLMN), the acquiring proximity service configuration data of the first user equipment includes:
sending, by the first network-side entity, a second request message to a third network-side entity, where the second request message includes the identity information of the first user equipment, so that the third network-side entity sends the proximity service configuration data of the first user equipment to the first network-side entity according to the second request message.

In an optional implementation manner of the present invention, the first request message further includes the identity information of the second user equipment, and the first user equipment and the second user equipment do not belong to a same public land mobile network (PLMN); and
after the receiving, by a first network-side entity, a first request message sent by first user equipment, further includes:
determining, by the first network-side entity at least according to the acquired proximity service configuration data of the first user equipment, that the first user equipment can perform a cross-public land mobile network PLMN proximity service corresponding to the application identifier.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

Further, when two user equipments are located in different PLMNs, a network-side entity can also implement proper authorization control on a cross-PLMN proximity service initiated by the user equipment, which extends an application scope of an existing proximity service authorization method.

FIG. 2 is a schematic flowchart of a proximity service authorization method according to another embodiment of the present invention. As shown in FIG. 2, the method includes:
201: First user equipment sends a first request message to a first network-side entity, where the first request message includes identity information of the first user equipment and an application identifier, so that the first network-side entity determines, at least according to acquired proximity service configuration data of the first user equipment, that the first user equipment can perform a proximity service corresponding to the application identifier.

The first request message may be, for example, a discovery request (device discovery request) message, and the first request message includes the identity information of the first user equipment and the application identifier. In an actual application, the request message further includes identity information of second user equipment. The first user equipment is discovering user equipment, and the second user equipment is discovered user equipment.

The identity information of the first user equipment includes, for example, a proximity service identifier registered with a corresponding network-side entity by the first user equipment, and an identifier of a public land mobile network (PLMN) in which the first user equipment is located. The identity information of the second user equipment includes, for example, a proximity service identifier registered with a corresponding network-side entity by the second user equipment and an identity of a PLMN in which the second user equipment is located.

It should be noted that, for specific implementation of the determining, by the first network-side entity at least according to acquired proximity service configuration data of the first user equipment, that the first user equipment can perform a proximity service corresponding to the application identifier, reference may be made to related descriptions in the embodiment shown in FIG. 1, and details are not provided herein again.

The proximity service configuration data of the first user equipment includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service; and
the range of proximity service communication of the first user equipment includes an identifier of an application, of the first user equipment, that can use a proximity service.

202: After the first network-side entity determines that the first user equipment can perform the proximity service corresponding to the application identifier, the first user equipment performs the proximity service corresponding to the application identifier.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

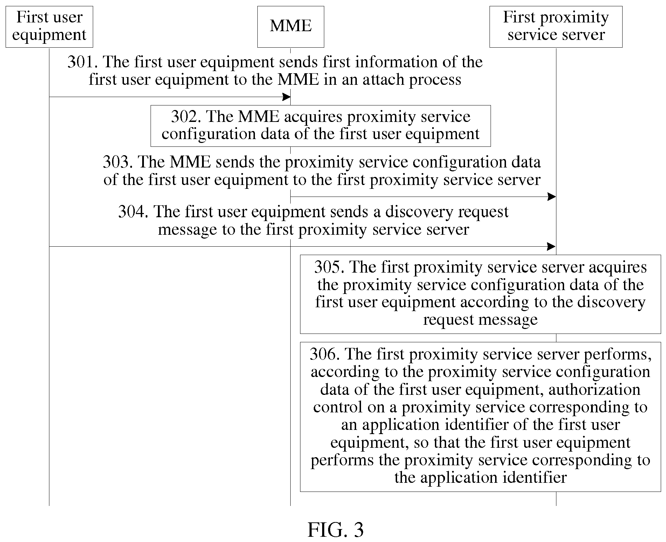

FIG. 3 is a signaling diagram of a proximity service authorization method according to another embodiment of the present invention. It is assumed that first user equipment and second user equipment are located in a same PLMN, a proximity service server corresponding to the first user equipment is a first proximity service server, a core network entity corresponding to the first user equipment is an MME, and proximity service configuration data of the first user equipment is saved in an HSS. The proximity service authorization method in this embodiment is shown in FIG. 3, and includes:
301: The first user equipment sends first information of the first user equipment to the MME in an attach process.

The first information of the first user equipment may be, for example, proximity service capability information of the first user equipment, and in specific implementation,
the first user equipment sends an attach request (attach request) message to the MME, where the proximity service capability information of the first user equipment is carried in the attach request message, the proximity service capability information of the first user equipment indicates whether the first user equipment supports a common proximity service (common ProSe) and a public safety (Public safety) service, the proximity service capability information of the first user equipment includes identity information of the first user equipment, the identity information is, for example, an international mobile subscriber identity (International Mobile Subscriber identity, IMSI) or a temporary identifier of user equipment (globally unique temporary identity, GUTI), and the proximity service capability information of the first user equipment may further include one or more of activating (activate) and/or deactivating (deactivate) discovery (discover), being discovered (discoverable), or proximity service communication (ProSe communication). Then, the MME may save the proximity service capability information of the first user equipment in a proximity service configuration data entry corresponding to the identity information of the first user equipment.

302: The MME acquires the proximity service configuration data of the first user equipment.

In specific implementation, assuming that, after the first user equipment is attached to the MME last time, the proximity service configuration data of the first user equipment changes, or the MME has no proximity service configuration data of the first user equipment, that is, when the MME queries, according to the identity information of the first user equipment, the proximity service configuration data entry corresponding to the identity information of the first user equipment, and no proximity service configuration data corresponding to the identity information of the first user equipment exists, the MME may send an update location request (Update Location Request) message to the HSS of the first user equipment; the HSS returns an update location acknowledgement (Update Location Ack) message to the MME, where the proximity service configuration data of the first user equipment is carried in the Update Location Ack message; and then, the MME may save the proximity service configuration data of the first user equipment in the proximity service configuration data entry corresponding to the identity information of the first user equipment.

The proximity service configuration data of the first user equipment includes, for example, one or more of the following: whether the first user equipment is allowed to discover, be discovered, perform proximity service communication, and a range of proximity service communication of the first user equipment. Further, the proximity service configuration data of the first user equipment may further include, for example, one or more of the following: whether the first user equipment is allowed to perform a proximity service across a public land mobile network, whether the first user equipment is allowed to perform a proximity service in a visited public land mobile network VPLMN, and whether the first user equipment is allowed to perform a public safety proximity service.

303: The MME sends the proximity service configuration data of the first user equipment to the first proximity service server.

In specific implementation, the MME may send the proximity service configuration data of the first user equipment to the first proximity service server by using an update proximity service information (Update ProSe info request) message. After the proximity service configuration data of the first user equipment changes, the MME may also send updated proximity service configuration data of the first user equipment to the first proximity service server by using the update proximity service information (Update ProSe info request) message. Then, the first proximity service server may save the proximity service configuration data of the first user equipment in a proximity service configuration data entry corresponding to the identity information of the first user equipment.

Optionally, after receiving the Update ProSe info request message, the first proximity service server may send an update proximity service information acknowledgement (Update ProSe info Ack) message to the MME.

304: The first user equipment sends a discovery request message to the first proximity service server.

When an application of the first user equipment needs to perform a proximity service, the first user equipment may send a discovery request message to the first proximity service server, where the discovery request message includes the identity information of the first user equipment and an application identifier. In an actual application, in order to discover the second user equipment, the discovery request message further includes identity information of the second user equipment.

305: The first proximity service server acquires the proximity service configuration data of the first user equipment according to the discovery request message.

For example, after receiving the discovery request message sent by the first user equipment, the first proximity service server may query, according to the identity information of the first user equipment that is included in the discovery request message, the proximity service configuration data entry corresponding to the identity information of the first user equipment, to acquire the proximity service configuration data of the first user equipment.

306: The first proximity service server performs, according to the proximity service configuration data of the first user equipment, authorization control on a proximity service corresponding to an application identifier of the first user equipment, so that the first user equipment performs the proximity service corresponding to the application identifier.

For example, it is assumed that it is determined, according to the proximity service configuration data of the first user equipment, that the first user equipment has a discovering capability. Because the first user equipment and the second user equipment are located in a same PLMN in this embodiment, a network-side entity may also acquire proximity service configuration data of the second user equipment according to the identity information of the second user equipment that is included in the discovery request message. If it is determined that the second user equipment has a capability of being discovered, and further, according to the proximity service configuration data of the first user equipment and the proximity service configuration data of the second user equipment, if both the proximity service configuration data of the first user equipment and the proximity service configuration data of the second user equipment include the application identifier, it may be determined that the proximity service corresponding to the application identifier may be performed between the first user equipment and the second user equipment.

Then, the first proximity service server triggers the second user equipment to broadcast a proximity service code of the second user equipment, and the first proximity service server sends the proximity service code, which is learned by broadcasting, of the second user equipment to the first user equipment. The first user equipment performs the proximity service corresponding to the application identifier between the first user equipment and the second user equipment by using the proximity service code of the second user equipment.

In this embodiment of the present invention, when receiving a request message sent by first user equipment, a network-side entity acquires proximity service configuration data of the first user equipment according to identity information of the first user equipment that is included in the request message; and performs, according to the proximity service configuration data of the first user equipment, authorization control on a proximity service corresponding to an application identifier of the first user equipment, so that the first user equipment performs the proximity service corresponding to the application identifier. Therefore, a network-side entity can properly control a proximity service initiated by user equipment, and service quality of the proximity service of the user equipment can be ensured.

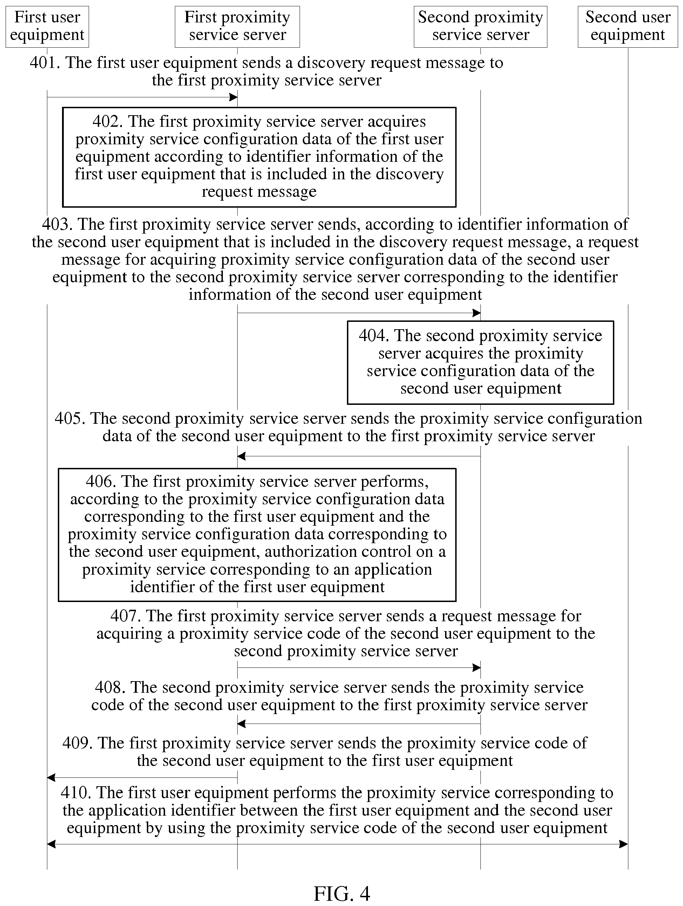

FIG. 4 is a signaling diagram of a proximity service authorization method according to another embodiment of the present invention. It is assumed that first user equipment and second user equipment are located in different PLMNs, a proximity service server corresponding to the first user equipment is a first proximity service server, and a proximity service server corresponding to the second user equipment is a second proximity service server. As shown in FIG. 4, the proximity service authorization method in this embodiment includes:
401: The first user equipment sends a discovery request message to the first proximity service server.

When an application of the first user equipment needs to perform a proximity service, the first user equipment may send a discovery request message to the first proximity service server, where the discovery request message includes identity information of the first user equipment and an application identifier. In an actual application, in order to discover the second user equipment, the discovery request message further includes identity information of the second user equipment.

The identity information of the first user equipment includes an identity of a PLMN in which the first user equipment is located; the identity information of the second user equipment includes an identity of a PLMN in which the second user equipment is located.

402: The first proximity service server acquires proximity service configuration data of the first user equipment according to identity information of the first user equipment that is included in the discovery request message.

For example, before step 401, the first proximity service server acquires the proximity service configuration data of the first user equipment from an MME of the first user equipment or an HSS of the first user equipment. For specific implementation, reference may be made to related descriptions in step 302 and step 303 in the embodiment shown in FIG. 3, and details are not provided again. The first proximity service server may save the acquired proximity service configuration data of the first user equipment in a proximity service configuration data entry corresponding to the identity information of the first user equipment.

After receiving the discovery request message sent by the first user equipment, the first proximity service server may query, according to the identity information of the first user equipment that is included in the discovery request message, the proximity service configuration data entry corresponding to the identity information of the first user equipment, to acquire the proximity service configuration data of the first user equipment.

The proximity service configuration data of the first user equipment includes, for example, one or more of the following: whether the first user equipment is allowed to discover, be discovered, perform proximity service communication, and a range of proximity service communication of the first user equipment. Further, the proximity service configuration data of the first user equipment may further include, for example, one or more of the following: whether the first user equipment is allowed to perform a proximity service across a public land mobile network, whether the first user equipment is allowed to perform a proximity service in a visited public land mobile network VPLMN, and whether the first user equipment is allowed to perform a public safety proximity service.

403: The first proximity service server sends, according to identity information of the second user equipment that is included in the discovery request message, a request message for acquiring proximity service configuration data of the second user equipment to the second proximity service server corresponding to the identity information of the second user equipment.

In specific implementation, after receiving the discovery request message sent by the first user equipment, the first proximity service server may determine, according to the identity information of the first user equipment and the identity information of the second user equipment that are included in the discovery request message, where it is assumed that the identity information corresponding to the first user equipment and the identity information corresponding to the second user equipment respectively include an identifier of a network in which the first user equipment is located and an identifier of a network in which the second user equipment is located (such as identifiers of PLMNs), that the first user equipment and the second user equipment are not located in a same PLMN. In this case, the first proximity service server sends the request message for acquiring the proximity service configuration data of the second user equipment to the second proximity service server by using the discovery request (device discovery request) message and according to the identity information of the second user equipment.

404: The second proximity service server acquires the proximity service configuration data of the second user equipment.

For example, the second proximity service server acquires the proximity service configuration data of the second user equipment from an MME of the second user equipment or an HSS of the second user equipment. For specific implementation, reference may be made to related descriptions in step 302 and step 303 in the embodiment shown in FIG. 3, and details are not provided again. The second proximity service server may save the acquired proximity service configuration data of the second user equipment in a proximity service configuration data entry corresponding to the identity information of the second user equipment.

After receiving the request message, which is sent by the first proximity service server, for acquiring the proximity service configuration data of the second user equipment, the second proximity service server queries, according to the identity information of the second user equipment that is included in the request message, the proximity service configuration data entry corresponding to the identity information of the second user equipment, to acquire the proximity service configuration data of the second user equipment.

The proximity service configuration data of the second user equipment includes, for example, one or more of the following: whether the second user equipment is allowed to discover, be discovered, perform proximity service communication, and a range of proximity service communication of the second user equipment. Further, the proximity service configuration data of the second user equipment may further include, for example, one or more of the following: whether the second user equipment is allowed to perform a proximity service across a public land mobile network, whether the second user equipment is allowed to perform a proximity service in a visited public land mobile network VPLMN, and whether the second user equipment is allowed to perform a public safety proximity service.

405: The second proximity service server sends the proximity service configuration data of the second user equipment to the first proximity service server.

406: The first proximity service server performs, according to the proximity service configuration data corresponding to the first user equipment and the proximity service configuration data corresponding to the second user equipment, authorization control on a proximity service corresponding to an application identifier of the first user equipment.

For example, if it is determined, according to the proximity service configuration data of the first user equipment, that the first user equipment has a capability of discovering across a PLMN, and it is determined, according to the proximity service configuration data of the second user equipment, that the second user equipment has a capability of being discovered across a PLMN, and further, according to the proximity service configuration data of the first user equipment and the proximity service configuration data of the second user equipment, if it is assumed that both the proximity service configuration data of the first user equipment and the proximity service configuration data of the second user equipment include the application identifier, then, it may be determined that the proximity service corresponding to the application identifier may be performed between the first user equipment and the second user equipment.

407: The first proximity service server sends a request message for acquiring a proximity service code of the second user equipment to the second proximity service server.

Because the first user equipment and the second user equipment are not located in the same PLMN, after it is determined that the proximity service corresponding to the application identifier may be performed between the first user equipment and the second user equipment across a PLMN, the first proximity service server sends the request message for acquiring the proximity service code of the second user equipment to the second proximity service server according to the identity information of the second user equipment.

408: The second proximity service server sends the proximity service code of the second user equipment to the first proximity service server.

Specifically, the second proximity service server triggers the second user equipment to broadcast the proximity service code of the second user equipment, and the second proximity service server sends the proximity service code, which is learned by broadcasting, of the second user equipment to the first proximity service server.

409: The first proximity service server sends the proximity service code of the second user equipment to the first user equipment.

410: The first user equipment performs the proximity service corresponding to the application identifier between the first user equipment and the second user equipment by using the proximity service code of the second user equipment.

In this embodiment of the present invention, when two user equipments that need to directly perform a proximity service are located in different PLMNs, a first proximity service server may acquire proximity service configuration data and a proximity service key of second user equipment by using a second proximity service server corresponding to the second user equipment, so that authorization control may be performed on a proximity service between the two user equipments located in different PLMNs, which extends an application scope of an existing proximity service authorization method.

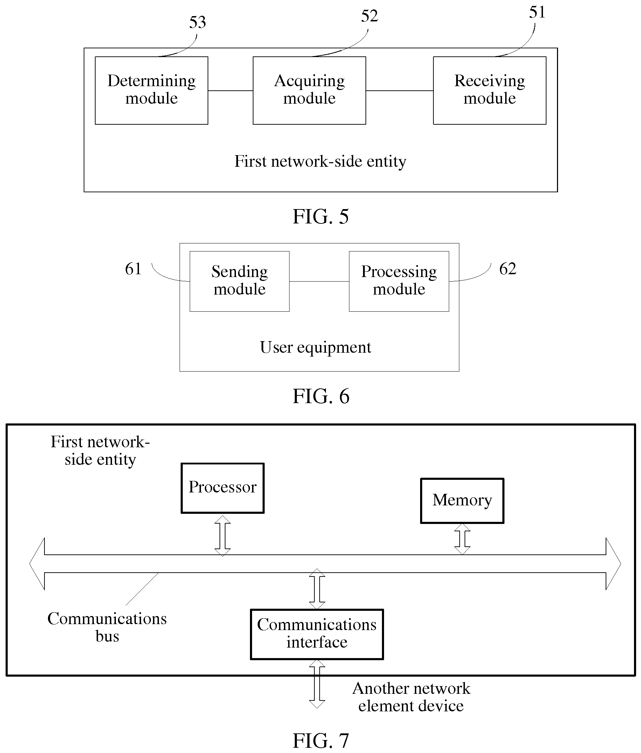

FIG. 5 is a schematic structural diagram of a first network-side entity according to another embodiment of the present invention. As shown in FIG. 5, the first network-side entity includes:
a receiving module 51, configured to receive a first request message sent by first user equipment, where the first request message includes identity information of the first user equipment and an application identifier;
an acquiring module 52, configured to acquire proximity service configuration data of the first user equipment; and
a determining module 53, configured to determine, at least according to the acquired proximity service configuration data of the first user equipment, that the first user equipment can perform a proximity service corresponding to the application identifier.

For example, the acquiring module 52 is specifically configured to receive first information sent by the first user equipment, where the first information includes one or more of the following: whether the first user equipment is allowed to discover, be discovered, perform proximity service communication, and a range of proximity service communication of the first user equipment.

For another example, the acquiring module 52 is specifically further configured to receive second information of a first user equipment sent by a second network-side entity, where the second information includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service.

For example, the range of proximity service communication of the first user equipment includes an identifier of an application, of the first user equipment, that can use a proximity service.

For example, the first user equipment is allowed to perform a proximity service in a visited public land mobile network (VPLMN), and the first network-side entity is a network-side entity of the visited public land mobile network VPLMN, the acquiring module 52 is specifically configured to send a second request message to a third network-side entity, where the second request message includes the identity information of the first user equipment, so that the third network-side entity sends the proximity service configuration data of the first user equipment to the first network-side entity according to the second request message.

For example, the first request message further includes identity information of second user equipment, and the first user equipment and the second user equipment do not belong to a same public land mobile network (PLMN); and

the determining module 53 is further configured to determine, at least according to the acquired proximity service configuration data of the first user equipment, that the first user equipment can perform a cross-public land mobile network (PLMN) proximity service corresponding to the application identifier.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

Further, when two user equipments are located in different PLMNs, a network-side entity can also implement proper authorization control on a cross-PLMN proximity service initiated by the user equipment, which extends an application scope of an existing proximity service authorization method.

FIG. 6 is a schematic structural diagram of user equipment according to another embodiment of the present invention. As shown in FIG. 6, the user equipment includes:
a sending module 61, configured to send a first request message to a first network-side entity, where the first request message includes identity information of the first user equipment and an application identifier, so that the first network-side entity determines, at least according to acquired proximity service configuration data of the first user equipment, that the first user equipment can perform a proximity service corresponding to the application identifier; and
a processing module 62, configured to: after the first network-side entity determines that the first user equipment can perform the proximity service corresponding to the application identifier, perform the proximity service corresponding to the application identifier.

The proximity service configuration data of the first user equipment includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service; and
the range of proximity service communication of the first user equipment includes an identifier of an application, of the first user equipment, that can use a proximity service.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

FIG. 7 is a schematic structural diagram of a first network-side entity according to another embodiment of the present invention. As shown in FIG. 7, the first network-side entity includes: a processor, a memory, and a communications bus. The processor is connected to the memory by using the communications bus, and the memory stores an instruction for implementing the proximity service authorization method. Further, the first network-side entity further includes a communications interface, and the first network-side entity is in communication connection with another network element device (such as user equipment) by using the communications interface.

When the processor invokes the instruction in the memory, the following steps may be performed:
receiving a first request message sent by first user equipment, where the first request message includes identity information of the first user equipment and an application identifier; and
determining, at least according to acquired proximity service configuration data of the first user equipment, that the first user equipment can perform a proximity service corresponding to the application identifier.

For example, the acquiring proximity service configuration data of the first user equipment includes:
receiving first information sent by the first user equipment, where the first information includes one or more of the following: whether the first user equipment is allowed to discover, be discovered, perform proximity service communication, and a range of proximity service communication of first user equipment.

For example, the acquiring proximity service configuration data of the first user equipment includes:
receiving second information of a first user equipment sent by a second network-side entity, where the second information includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service.

For example, the range of proximity service communication of the first user equipment includes an identifier of an application, of the first user equipment, that can use a proximity service.

For example, if the first user equipment is allowed to perform a proximity service in a visited public land mobile network (VPLMN), and the first network-side entity is a network-side entity of the visited public land mobile network (VPLMN), the acquiring proximity service configuration data of the first user equipment includes:
sending a second request message to a third network-side entity, where the second request message includes the identity information of the first user equipment, so that the third network-side entity sends the proximity service configuration data of the first user equipment to the first network-side entity according to the second request message.

For example, the first request message further includes identity information of second user equipment, and the first user equipment and the second user equipment do not belong to a same public land mobile network (PLMN); and
after the receiving a first request message sent by first user equipment, further includes:
determining, at least according to the acquired proximity service configuration data of the first user equipment, that the first user equipment can perform a cross-public land mobile network PLMN proximity service corresponding to the application identifier.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

Further, when two user equipments are located in different PLMNs, the first network-side entity can also implement proper authorization control on a cross-PLMN proximity service initiated by the user equipment, which extends an application scope of an existing proximity service authorization method.

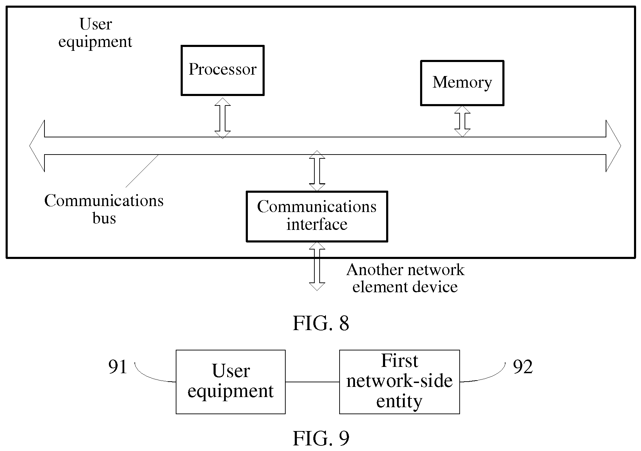

FIG. 8 is a schematic structural diagram of user equipment according to another embodiment of the present invention. As shown in FIG. 8, the user equipment includes: a processor, a memory, and a communications bus. The processor is connected to the memory by using the communications bus, and the memory stores an instruction for implementing the proximity service authorization method. Further, the user equipment further includes a communications interface, and the user equipment is in communication connection with another network element device (such as a network-side entity) by using the communications interface.

When the processor invokes the instruction in the memory, the following steps may be performed:
sending a first request message to a first network-side entity, where the first request message includes identity information of the first user equipment and an application identifier, so that the first network-side entity determines, at least according to acquired proximity service configuration data of the first user equipment, that the first user equipment can perform a proximity service corresponding to the application identifier; and
after the first network-side entity determines that the first user equipment can perform the proximity service corresponding to the application identifier, performing the proximity service corresponding to the application identifier.

The proximity service configuration data of the first user equipment includes one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network (VPLMN), and whether the first user equipment is allowed to perform a public safety proximity service; and
the range of proximity service communication of the first user equipment includes an identifier of an application, of the first user equipment, that can use a proximity service.

In this embodiment of the present invention, when receiving a request message sent by first user equipment, a first network-side entity determines, at least according to acquired proximity service configuration data of the first user equipment, that the first user equipment can perform a proximity service corresponding to an application identifier; therefore, a network-side entity can properly control a proximity service initiated by user equipment, and service quality of the proximity service of the user equipment can be ensured.

FIG. 9 is a schematic structural diagram of a proximity service authorization system according to another embodiment of the present invention. As shown in FIG. 9, the proximity service authorization system includes user equipment 91 and a first network-side entity 92, where
the user equipment 91 is the user equipment according to the embodiment shown in FIG. 6 or FIG. 8, and details are not provided again; and
the first network-side entity 92 is the network-side entity according to the embodiment shown in FIG. 5 or FIG. 7, and details are not provided again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a form of code in a computer-readable storage medium. The code is stored in the computer-readable storage medium and includes several instructions for instructing a processor or a hardware circuit to perform all or some of the steps of the methods described in the embodiments of the present invention. The foregoing storage medium includes: any medium that can store program code, such as a miniature high-capacity mobile storage disk, which needs no physical drive, of a universal serial bus interface, a removable hard disk, a read-only memory (Read-Only Memory in English, ROM for short), a random access memory (Random Access Memory in English, RAM for short), a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the protection scope of the technical solutions of the embodiments of the present invention.

## Claims

1. A proximity service authorization method, comprising:
receiving (101), by a first network-side entity, a first request message sent by first user equipment, wherein the first request message comprises identity information of the first user equipment and an application identifier;
acquiring proximity service configuration data of the first user equipment; and
determining (102), at least according to acquired proximity service configuration data of the first user equipment, that the first user equipment can perform a proximity service corresponding to the application identifier;
wherein the acquiring proximity service configuration data of the first user equipment comprises:
receiving, by the first network-side entity, second information of the first user equipment sent by a second network-side entity, wherein the second information comprises one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network ,VPLMN, and whether the first user equipment is allowed to perform a public safety proximity service.

2. The method according to claim 1, wherein the range of proximity service communication of the first user equipment comprises an identifier of an application, of the first user equipment, that can use a proximity service.

3. The method according to claim 1 or 2, wherein if the first user equipment is allowed to perform a proximity service in a visited public land mobile network ,VPLMN, and the first network-side entity is a network-side entity of the visited public land mobile network ,VPLMN, the acquiring proximity service configuration data of the first user equipment comprises:
sending, by the first network-side entity, a second request message to a third network-side entity, wherein the second request message comprises the identity information of the first user equipment, so that the third network-side entity sends the proximity service configuration data of the first user equipment to the first network-side entity according to the second request message.

4. The method according to any one of claims 1 to 3, wherein the first request message further comprises identity information of second user equipment, and the first user equipment and the second user equipment do not belong to a same public land mobile network ,PLMN; and
after the receiving, by a first network-side entity, a first request message sent by first user equipment, the method further comprises:
determining, by the first network-side entity at least according to the acquired proximity service configuration data of the first user equipment, that the first user equipment can perform a cross-public land mobile network ,PLMN, proximity service corresponding to the application identifier.

5. A proximity service authorization method, comprising:
sending (201), by first user equipment, a first request message to a first network-side entity, wherein the first request message comprises identity information of the first user equipment and an application identifier, so that the first network-side entity determines, at least according to acquired proximity service configuration data of the first user equipment, that the first user equipment can perform a proximity service corresponding to the application identifier; and
after the first network-side entity determines that the first user equipment can perform the proximity service corresponding to the application identifier, performing (202), by the first user equipment, the proximity service corresponding to the application identifier;
wherein the proximity service configuration data of the first user equipment comprises one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network, VPLMN, and whether the first user equipment is allowed to perform a public safety proximity service; and
the range of proximity service communication of the first user equipment comprises an identifier of an application, of the first user equipment, that can use a proximity service.

6. A first network-side entity, comprising:
a receiving module (51), configured to receive a first request message sent by first user equipment, wherein the first request message comprises identity information of the first user equipment and an application identifier;
an acquiring module (52), configured to acquire proximity service configuration data of the first user equipment; and
a determining module (53), configured to determine, at least according to the acquired proximity service configuration data of the first user equipment, that the first user equipment can perform a proximity service corresponding to the application identifier;
wherein the acquiring module (52) is specifically further configured to receive second information of the first user equipment sent by a second network-side entity, wherein the second information comprises one or more of the following: whether the first user equipment is allowed to discover, be discovered, perform proximity service communication, a range of proximity service communication of the first user equipment, whether the first user equipment is allowed to perform a proximity service across a public land mobile network, whether the first user equipment is allowed to perform a proximity service in a visited public land mobile network ,VPLMN, and whether the first user equipment is allowed to perform a public safety proximity service.

7. The first network-side entity according to claim 6, wherein the range of proximity service communication of the first user equipment comprises an identifier of an application, of the first user equipment, that can use a proximity service.

8. The first network-side entity according to claim 6 or 7, wherein if the first user equipment is allowed to perform a proximity service in a visited public land mobile network ,VPLMN, and the first network-side entity is a network-side entity of the ,VPLMN, the acquiring module (52) is specifically configured to send a second request message to a third network-side entity, wherein the second request message comprises the identity information of the first user equipment, so that the third network-side entity sends the proximity service configuration data of the first user equipment to the first network-side entity according to the second request message.

9. The first network-side entity according to any one of claims 6 to 8, wherein the first request message further comprises identity information of second user equipment, and the first user equipment and the second user equipment do not belong to a same public land mobile network ,PLMN; and
the determining module (53) is further configured to determine, at least according to the acquired proximity service configuration data of the first user equipment, that the first user equipment can perform a cross-public land mobile network ,PLMN, proximity service corresponding to the application identifier.

10. User equipment, comprising:
a sending module (61), configured to send a first request message to a first network-side entity, wherein the first request message comprises identity information of the user equipment and an application identifier, so that the first network-side entity determines, at least according to acquired proximity service configuration data of the user equipment, that the user equipment can perform a proximity service corresponding to the application identifier; and
a processing module (62), configured to: after the first network-side entity determines that the user equipment can perform the proximity service corresponding to the application identifier, perform the proximity service corresponding to the application identifier;
wherein the proximity service configuration data of the user equipment comprises one or more of the following: whether the user equipment is allowed to discover, be discovered, perform proximity service communication, a range of proximity service communication of the user equipment, whether the user equipment is allowed to perform a proximity service across a public land mobile network, whether the user equipment is allowed to perform a proximity service in a visited public land mobile network, VPLMN, and whether the user equipment is allowed to perform a public safety proximity service; and
the range of proximity service communication of the user equipment comprises an identifier of an application, of the user equipment, that can use a proximity service.

11. A proximity service authorization system, comprising user equipment and a first network-side entity, wherein:
the user equipment is the user equipment according to claim 10; and
the network-side entity is the first network-side entity according to any one of claims 6 to 9.

## Patentansprüche

1. Verfahren zur Näherungsdienstautorisierung, umfassend:
Empfang (101) einer ersten Anfragemeldung, die durch eine erste Benutzerausrüstung gesendet wurde, durch eine erste netzwerkseitige Entität, wobei die erste Anfragemeldung Identitätsinformationen der ersten Benutzerausrüstung und eine Anwendungskennung umfasst;
Beschaffung von Näherungsdienstkonfigurationsdaten der ersten Benutzerausrüstung; und Bestimmung (102) mindestens nach den beschafften Näherungsdienstkonfigurationsdaten der
ersten Benutzerausrüstung, dass die erste Benutzerausrüstung einen Näherungsdienst durchführen kann, der der Anwendungskennung entspricht;
wobei die Beschaffung von Näherungsdienstkonfigurationsdaten der ersten Benutzerausrüstung umfasst:
Empfang von zweiten Informationen der ersten Benutzerausrüstung, die durch eine zweite netzwerkseitige Entität gesendet wurden, durch die erste netzwerkseitige Entität, wobei die zweiten Informationen eines oder mehrere der folgenden umfassen: ob die erste Benutzerausrüstung erkennen darf, erkannt werden darf, Näherungsdienstkommunikation ausführen darf, einen Bereich der Näherungsdienstkommunikation der ersten Benutzerausrüstung, ob die erste Benutzerausrüstung einen Näherungsdienst über ein öffentliches mobiles Landnetzwerk ausführen darf, ob die erste Benutzerausrüstung einen Näherungsdienst in einem besuchten öffentlichen mobilen Landnetzwerk, VPLMN, ausführen darf und ob die erste Benutzerausrüstung einen öffentlichen Sicherheitsnäherungsdienst ausführen darf.

2. Verfahren nach Anspruch 1, wobei der Bereich der Näherungsdienstkommunikation der ersten Benutzerausrüstung eine Kennung einer Anwendung der ersten Benutzerausrüstung umfasst, die einen Näherungsdienst verwenden kann.

3. Verfahren nach Anspruch 1 oder 2, wobei, wenn die erste Benutzerausrüstung einen Näherungsdienst in einem besuchten öffentlichen mobilen Landnetzwerk, VPLMN, ausführt und die erste netzwerkseitige Entität eine netzwerkseitige Entität des besuchten öffentlichen mobilen Landnetzwerks, VPLMN, ist, die Beschaffung der Näherungsdienstkonfigurationsdaten der ersten Benutzerausrüstung umfasst:
Senden einer zweiten Anfragemeldung durch die erste netzwerkseitige Entität an eine dritte netzwerkseitige Entität, wobei die zweite Anfragemeldung die Kennungsinformationen der ersten Benutzerausrüstung umfasst, sodass die dritte netzwerkseitige Entität die Näherungsdienstkonfigurationsdaten der ersten Benutzerausrüstung an die erste netzwerkseitige Entität der zweiten Anfragemeldung entsprechend sendet.

4. Verfahren nach einem der Ansprüche 1 bis 3, wobei: die erste Anfragemeldung ferner Kennungsinformationen der zweiten Benutzerausrüstung umfasst und die erste Benutzerausrüstung und die zweite Benutzerausrüstung nicht zu einem selben öffentlichen mobilen Landnetzwerk, PLMN, gehören; und
das Verfahren nach dem Empfang einer ersten Anfragemeldung, die durch die erste Benutzerausrüstung gesendet wird, durch eine erste netzwerkseitige Entität ferner umfasst:
Bestimmung, dass die erste Benutzerausrüstung der Anwendungskennung entsprechend einen Näherungsdienst über öffentliche mobile Landnetzwerke, PLMN, hinweg ausführen kann, durch die erste netzwerkseitige Entität mindestens nach den beschafften Näherungsdienstkonfigurationsdaten der ersten Benutzerausrüstung.

5. Verfahren zur Näherungsdienstautorisierung, umfassend:
Senden (201) einer ersten Anfragemeldung durch die erste Benutzerausrüstung an eine erste netzwerkseitige Entität, wobei die erste Anfragemeldung Kennungsinforationen der ersten Benutzerausrüstung und einer Anwendungskennung umfasst, sodass die erste netzwerkseitige Entität mindestens nach einer beschafften Näherungsdienstkonfigurationsdaten der ersten Benutzerausrüstung bestimmt, dass die erste Benutzerausrüstung einen Näherungsdienst, der der Anwendungskennung entspricht, durchführen kann; und
nachdem die erste netzwerkseitige Entität bestimmt, dass die erste Benutzerausrüstung den Näherungsdienst der Anwendungskennung entsprechend durchführen kann, Durchführen (202) des Näherungsdiensts, der der Anwendungskennung entspricht, durch die erste Benutzerausrüstung;
wobei die Näherungsdienstkonfigurationsdaten der ersten Benutzerausrüstung eines oder mehrere der folgenden umfassen: ob die erste Benutzerausrüstung erkennen darf, erkannt werden darf, Näherungsdienstkommunikation ausführen darf, einen Bereich der Näherungsdienstkommunikation der ersten Benutzerausrüstung, ob die erste Benutzerausrüstung einen Näherungsdienst über ein öffentliches mobiles Landnetzwerk ausführen darf, ob die erste Benutzerausrüstung einen Näherungsdienst in einem besuchten öffentlichen mobilen Landnetzwerk, VPLMN, ausführen darf und ob die erste Benutzerausrüstung einen öffentlichen Sicherheitsnäherungsdienst ausführen darf; und
der Bereich der Näherungsdienstkommunikation der ersten Benutzerausrüstung eine Kennung einer Anwendung der ersten Benutzerausrüstung, die einen Näherungsdienst verwenden kann, umfasst.

6. Erste netzwerkseitige Entität, umfassend:
ein Empfangsmodul (51), konfiguriert für den Empfang einer ersten Anfragemeldung, die durch eine erste Benutzerausrüstung gesendet wird, wobei die erste Anfragemeldung Identitätsinformationen der ersten Benutzerausrüstung und eine Anwendungskennung umfasst;
ein Beschaffungsmodul (52), konfiguriert zur Beschaffung von Näherungsdienstkonfigurationsdaten der ersten Benutzerausrüstung; und
ein Bestimmungsmodul (53), konfiguriert zur Bestimmung mindestens nach den beschafften Näherungsdienstkonfigurationsdaten der ersten Benutzerausrüstung, dass die erste Benutzerausrüstung einen Näherungsdienst der Anwendungskennung entsprechend ausführen kann;
wobei das Beschaffungsmodul (52) ferner speziell konfiguriert ist, zweite Informationen der ersten Benutzerausrüstung zu empfangen, die durch eine zweite netzwerkseitige Entität gesendet werden, wobei die zweiten Informationen eines oder mehrere der folgenden umfassen: ob die erste Benutzerausrüstung erkennen darf, erkannt werden darf, Näherungsdienstkommunikation ausführen darf, einen Bereich der Näherungsdienstkommunikation der ersten Benutzerausrüstung, ob die erste Benutzerausrüstung einen Näherungsdienst über ein öffentliches mobiles Landnetzwerk ausführen darf, ob die erste Benutzerausrüstung einen Näherungsdienst in einem besuchten öffentlichen mobilen Landnetzwerk, VPLMN, ausführen darf und ob die erste Benutzerausrüstung einen öffentlichen Sicherheitsnäherungsdienst ausführen darf.

7. Erste netzwerkseiteige Entität nach Anspruch 6, wobei der Bereich der Näherungsdienstkommunikation der ersten Benutzerausrüstung eine Kennung einer Anwendung der ersten Benutzerausrüstung umfasst, die einen Näherungsdienst verwenden kann.

8. Erste netzwerkseitige Entität nach Anspruch 6 oder 7, wobei, wenn die erste Benutzerausrüstung einen Näherungsdienst in einem besuchten öffentlichen mobilen Landnetzwerk, VPLMN, ausführen darf und die erste netzwerkseitige Entität eine netzwerkseitige Entität des, VPLMN, ist, das Beschaffungsmodul (52) speziell konfiguriert ist, eine zweite Anfragemeldung an eine dritte netzwerkseitige Entität zu senden, wobei die zweite Anfragemeldung die Kennungsinformationen der ersten Benutzerausrüstung umfasst, sodass die dritte netzwerkseitige Entität die Näherungsdienstkonfigurationsdaten der ersten Benutzerausrüstung an die erste netzwerkseitige Entität nach der zweiten Anfragemeldung sendet.

9. Erste netzwerkseitige Entität nach einem der Ansprüche 6 bis 8, wobei: die erste Anfragemeldung ferner Kennungsinformationen der zweiten Benutzerausrüstung umfasst und die erste Benutzerausrüstung und die zweite Benutzerausrüstung nicht zu einem selben öffentlichen mobilen Landnetzwerk, PLMN, gehören; und
das Bestimmungsmodul (53) ferner konfiguriert ist, mindestens nach den beschafften Näherungsdienstkonfigurationsdaten der ersten Benutzerausrüstung zu bestimmen, dass die erste Benutzerausrüstung einen Näherungsdienst über öffentliche mobile Landnetzwerke, PLMN, hinweg der Anwendungskennung entsprechend ausführen kann.

10. Benutzervorrichtung, umfassend:
ein Sendemodul (61), konfiguriert zum Senden einer ersten Anfragemeldung an eine erste netzwerkseitige Entität, wobei die erste Anfragemeldung Kennungsinforationen der Benutzerausrüstung und einer Anwendungskennung umfasst, sodass die erste netzwerkseitige Entität mindestens nach einer beschafften Näherungsdienstkonfigurationsdaten der Benutzerausrüstung bestimmt, dass die Benutzerausrüstung einen Näherungsdienst durchführen kann, der der Anwendungskennung entspricht; und
ein Verarbeitungsmodul (62), konfiguriert um den Näherungsdienst durchzuführen, der der Anwendungskennung entspricht, nachdem die erste netzwerkseitige Entität bestimmt, dass die Benutzerausrüstung den Näherungsdienst der Anwendungskennung entsprechend durchführen kann;
wobei die Näherungsdienstkonfigurationsdaten der Benutzerausrüstung eines oder mehrere der folgenden umfassen: ob die Benutzerausrüstung erkennen darf, erkannt werden darf, Näherungsdienstkommunikation ausführen darf, einen Bereich der Näherungsdienstkommunikation der Benutzerausrüstung, ob die Benutzerausrüstung einen Näherungsdienst über ein öffentliches mobiles Landnetzwerk ausführen darf, ob die Benutzerausrüstung einen Näherungsdienst in einem besuchten öffentlichen mobilen Landnetzwerk, VPLMN, ausführen darf und ob die Benutzerausrüstung einen öffentlichen Sicherheitsnäherungsdienst ausführen darf; und
der Bereich der Näherungsdienstkommunikation der Benutzerausrüstung eine Kennung einer Anwendung der Benutzerausrüstung umfasst, die einen Näherungsdienst verwenden kann.

11. Näherungsdienstautorisierungssystem, umfassend Benutzerausrüstung und eine erste netzwerkseitige Entität, wobei:
die Benutzerausrüstung die Benutzerausrüstung nach Anspruch 10 ist; und
die netzwerkseitige Entität die erste netzwerkseitige Entität nach einem der Ansprüche 6 bis 9 ist.

## Revendications

1. Procédé d'autorisation de service de proximité comprenant de :
recevoir (101), par une première entité côté réseau, un premier message de demande envoyé par un premier équipement utilisateur, dans lequel le premier message de demande comprend des informations d'identité du premier équipement utilisateur et un identificateur d'application ;
acquérir des données de configuration de service de proximité du premier équipement utilisateur ; et
déterminer (102), au moins en fonction des données de configuration de service de proximité acquises du premier équipement utilisateur, que le premier équipement utilisateur peut effectuer un service de proximité correspondant à l'identificateur d'application ;
dans lequel l'acquisition des données de configuration de service de proximité du premier équipement utilisateur comprend de :
recevoir, par la première entité côté réseau, de secondes informations du premier équipement utilisateur envoyées par une seconde entité côté réseau, dans lequel les secondes informations comprennent un ou plusieurs des éléments suivants : si le premier équipement utilisateur est autorisé à découvrir, être découvert, effectuer une communication de service de proximité, une plage de communication de service de proximité du premier équipement utilisateur, si le premier équipement utilisateur est autorisé à effectuer un service de proximité sur un réseau mobile terrestre public, si le premier équipement utilisateur est autorisé à effectuer un service de proximité dans un réseau mobile terrestre public visité, VPLMN, et si le premier équipement utilisateur est autorisé à effectuer un service de proximité de sécurité publique.

2. Procédé selon la revendication 1, dans lequel la plage de communication de service de proximité du premier équipement utilisateur comprend un identificateur d'une application, du premier équipement utilisateur, qui peut utiliser un service de proximité.

3. Procédé selon la revendication 1 ou 2, dans lequel si le premier équipement utilisateur est autorisé à effectuer un service de proximité dans un réseau mobile terrestre public visité, VPLMN, et la première entité côté réseau est une entité côté réseau du réseau mobile terrestre public visité, VPLMN, l'acquisition des données de configuration de service de proximité du premier équipement utilisateur comprend de :
envoyer, par la première entité côté réseau, un second message de demande à une troisième entité côté réseau, dans lequel le second message de demande comprend les informations d'identité du premier équipement utilisateur, de sorte que la troisième entité côté réseau envoie les données de configuration de service de proximité du premier équipement utilisateur à la première entité côté réseau en fonction du second message de demande.

4. Procédé selon l'une quelconque des revendications 1 à 3, dans lequel le premier message de demande comprend en outre des informations d'identité d'un second équipement utilisateur, et le premier équipement utilisateur et le second équipement utilisateur n'appartiennent pas à un même réseau mobile terrestre public, PLMN ; et après la réception, par une première entité côté réseau, d'un premier message de demande envoyé par le premier équipement utilisateur, le procédé comprend en outre de :
déterminer, par la première entité côté réseau au moins en fonction des données de configuration de service de proximité acquises du premier équipement utilisateur, que le premier équipement utilisateur peut effectuer un service de proximité inter-réseau mobile terrestre public (PLMN) correspondant à l'identificateur d'application.

5. Procédé d'autorisation de service de proximité comprenant de :
envoyer (201), par le premier équipement utilisateur, un premier message de demande à une première entité côté réseau,
dans lequel le premier message de demande comprend des informations d'identité du premier équipement utilisateur et un identificateur d'application, de sorte que la première entité côté réseau détermine, au moins en fonction des données de configuration de service de proximité acquises du premier équipement utilisateur, que le premier équipement utilisateur peut effectuer un service de proximité correspondant à l'identificateur d'application ; et
après que la première entité côté réseau a déterminé que le premier équipement utilisateur peut effectuer le service de proximité correspondant à l'identificateur d'application, effectuer (202), par le premier équipement utilisateur, le service de proximité correspondant à l'identificateur d'application ;
dans lequel les données de configuration de service de proximité du premier équipement utilisateur comprennent un ou plusieurs des éléments suivants : si le premier équipement utilisateur est autorisé à découvrir, à être découvert, à effectuer une communication de service de proximité, une plage de communication de service de proximité du premier équipement utilisateur, si le premier équipement utilisateur est autorisé à effectuer un service de proximité sur un réseau mobile terrestre public, si le premier équipement utilisateur est autorisé à effectuer un service de proximité dans un réseau mobile terrestre public visité, VPLMN, et si le premier équipement utilisateur est autorisé à effectuer un service de proximité de sécurité publique ; et
la plage de communication de service de proximité du premier équipement utilisateur comprend un identificateur d'une application, du premier équipement utilisateur, qui peut utiliser un service de proximité.

6. Première entité côté réseau, comprenant :
un module de réception (51), configuré pour recevoir un premier message de demande envoyé par un premier équipement utilisateur, dans lequel le premier message de demande comprend des informations d'identité du premier équipement utilisateur et un identificateur d'application ;
un module d'acquisition (52), configuré pour acquérir des données de configuration de service de proximité du premier équipement utilisateur ; et
un module de détermination (53), configuré pour déterminer, au moins en fonction des données de configuration de service de proximité acquises du premier équipement utilisateur, que le premier équipement utilisateur peut effectuer un service de proximité correspondant à l'identificateur d'application ;
dans lequel le module d'acquisition (52) est en outre configuré spécifiquement pour recevoir de secondes informations du premier équipement utilisateur envoyées par une seconde entité côté réseau, dans lequel les secondes informations comprennent une ou plusieurs des indications suivantes : si le premier équipement utilisateur est autorisé à découvrir, à être découvert, à effectuer une communication de service de proximité, une plage de communication de service de proximité du premier équipement utilisateur, si le premier équipement utilisateur est autorisé à effectuer un service de proximité sur un réseau mobile terrestre public, si le premier équipement utilisateur est autorisé à effectuer un service de proximité dans un réseau mobile terrestre public visité, VPLMN, et si le premier équipement utilisateur est autorisé à effectuer un service de proximité de sécurité publique.

7. Première entité côté réseau selon la revendication 6, dans laquelle la plage de communication de service de proximité du premier équipement utilisateur comprend un identificateur d'une application, du premier équipement utilisateur, qui peut utiliser un service de proximité.

8. Première entité côté réseau selon la revendication 6 ou 7, dans laquelle, si le premier équipement utilisateur est autorisé à effectuer un service de proximité dans un réseau mobile terrestre public visité, VPLMN, et la première entité côté réseau est une entité côté réseau du VPLMN, le module d'acquisition (52) est spécifiquement configuré pour envoyer un second message de demande à une troisième entité côté réseau, le second message de demande comprenant les informations d'identité du premier équipement utilisateur, de sorte que la troisième entité côté réseau envoie les données de configuration de service de proximité du premier équipement utilisateur à la première entité côté réseau conformément au second message de demande.

9. Première entité côté réseau selon l'une quelconque des revendications 6 à 8, dans laquelle le premier message de demande comprend en outre des informations d'identité d'un second équipement utilisateur, et le premier équipement utilisateur et le second équipement utilisateur n'appartiennent pas à un même réseau mobile terrestre public, PLMN ; et
le module de détermination (53) est en outre configuré pour déterminer, au moins en fonction des données de configuration de service de proximité acquises du premier équipement utilisateur, que le premier équipement utilisateur peut effectuer un service de proximité inter-réseau mobile terrestre public (PLMN) correspondant à l'identificateur d'application.

10. Équipement utilisateur comprenant :
un module d'envoi (61), configuré pour envoyer un premier message de demande à une première entité côté réseau, dans lequel le premier message de demande comprend des informations d'identité de l'équipement utilisateur et un identificateur d'application, de sorte que la première entité côté réseau détermine, au moins en fonction des données de configuration de service de proximité acquises de l'équipement utilisateur, que l'équipement utilisateur peut effectuer un service de proximité correspondant à l'identificateur d'application ; et
un module de traitement (62) configuré pour : une fois que la première entité côté réseau a déterminé que l'équipement utilisateur peut effectuer le service de proximité correspondant à l'identificateur d'application, effectuer le service de proximité correspondant à l'identificateur d'application ;
dans lequel les données de configuration de service de proximité de l'équipement utilisateur comprennent une ou plusieurs des indications suivantes : si l'équipement utilisateur est autorisé à découvrir, à être découvert, à effectuer une communication de service de proximité, une plage de communication de service de proximité de l'équipement utilisateur, si l'équipement utilisateur est autorisé à effectuer un service de proximité sur un réseau mobile terrestre public, si l'équipement utilisateur est autorisé à effectuer un service de proximité dans un réseau mobile terrestre public visité, VPLMN, et si l'équipement utilisateur est autorisé à effectuer un service de proximité de sécurité publique ; et
la plage de communication de service de proximité de l'équipement utilisateur comprend un identificateur d'une application, de l'équipement utilisateur, qui peut utiliser un service de proximité.

11. Système d'autorisation de service de proximité, comprenant un équipement utilisateur et une première entité côté réseau, dans lequel :
l'équipement utilisateur est l'équipement utilisateur selon la revendication 10 ; et
l'entité côté réseau est la première entité côté réseau selon l'une quelconque des revendications 6 à 9.
